(19) Europäisches Patentamt
European Patent Office
Office européen des brevets

(11) Veröffentlichungsnummer: **0 251 031**
**A2**

(12) **EUROPÄISCHE PATENTANMELDUNG**

(21) Anmeldenummer: 87108692.2

(51) Int.Cl.³: C 08 G 77/60

(22) Anmeldetag: 16.06.87

(30) Priorität: 20.06.86 DE 3620635

(43) Veröffentlichungstag der Anmeldung: 07.01.88 Patentblatt 88/1

(84) Benannte Vertragsstaaten: AT BE CH DE FR GB IT LI NL

(71) Anmelder: WACKER-CHEMIE GMBH
Prinzregentenstrasse 22
D-8000 München 22(DE)

(72) Erfinder: Rengstl, Alfred, Dr. Dipl.-Chem.
Am Zoglerberg 8
D-8261 Reischach(DE)

(72) Erfinder: Schmidhuber, Andrea
Dorfstrasse 10
D-8261 Mehring(DE)

# (54) Verfahren zum Verringern des Halogengehalts von halogenhaltigen Polycarbosilanen und Polysilanen.

(57) Der Halogengehalt von direkt an Siliciumatome gebundenes Halogen enthaltenden Polycarbosilanen und/oder Polysilanen kann vermindert werden, indem man die genannten Polymere mit Hexamethyldisilazan umsetzt.

EP 0 251 031 A2

W A C K E R - C H E M I E
G M B H

München, 06.06.1986 0251031
PAT/Dr.Re/Me

Wa 8556-A

# Verfahren zum Verringern des Halogengehalts von halogenhaltigen Polycarbosilanen und Polysilanen

Die Erfindung betrifft ein Verfahren zum Verringern des Halogengehalts von direkt an Siliciumatome gebundenem Halogen enthaltenden Polycarbosilanen und/oder Polysilanen durch Umsetzung dieser Polycarbosilane bzw. Polysilane mit Hexamethyldisilazan. Polysilane und Polycarbosilane sind wertvolle Zwischenprodukte zur Herstellung von Siliziumcarbid. Polysilane, beispielsweise, sind herstellbar aus Organochlorsilanen und/oder Organochlordisilanen in Gegenwart von Tetraalkylphosphonium- oder Tetraalkylammoniumhalogeniden (US 4 298 558, GB 2 024 789). Aufgrund dieser Herstellungsweise enthalten die genannten Polymere erhebliche Mengen an an Siliciumatome gebundenem Chlor. Um die Freisetzung von halogenhaltigen Gasen durch Hydrolyse vor und durch Pyrolyse während der Reaktion zu Siliziumcarbid zu verhindern, muß dieser Halogengehalt vermindert werden. R. H. Baney et al. (Organometallics 1983 (2), 859 - 864) beschreiben die Reaktion von halogenhaltigen Polycarbosilanen und Polysilanen mit Grignard Reagenzien, Alkoholen, Lithiumalanat bzw. mit primären Aminen. R. H. Baney beschreibt auch die Reaktion von Polyhalosilanen mit Hexamethyldisiloxan in Gegenwart einer starken Säure und Toluol als Lösungsmittel (US 4 310 481, ausgegeben am 12. Januar 1982, Dow Corning Corporation).

Aufgabe der vorliegenden Erfindung war es, ein Verfahren zur Verminderung des Halogengehalts von halogenhaltigen Polysilanen und Polycarbosilanen zur Verfügung zu stellen, das apparativ einfach ist, wobei das verwendete Reagens preiswert und ohne größere Sicherheitsvorkehrungen handhabbar ist, in dem genannten Verfahren kein Lösungsmittel erforderlich ist sowie unerwünschte Produkte und überschüssiges Reagens

sich nach der dem genannten Verfahren zugrundeliegenden Reaktion auf einfache Weise entfernen lassen. Diese Aufgabe wird durch die vorliegende Erfindung dadurch gelöst, daß die genannten Polysilane und/oder Polycarbosilane mit Hexamethyldisilazan in Kontakt gebracht werden.

Direkt an Siliciumatome gebundenes Halogen enthaltende Polysilane sind z. B. aus der eingangs zitierten Literatur bekannt. Sie sind aus Einheiten der Formel

$$R_nSi \qquad (I)$$

aufgebaut, wobei

R gleiche oder verschiedene Halogen- und/oder Kohlenwasserstoffreste mit 1 bis 18 Kohlenstoffatomen, insbesondere das Chloratom und/oder der Methylrest;

n eine ganze Zahl im Wert von 0, 1, 2 oder 3

bedeuten, und die Einheiten über Si-Si-Bindungen miteinander verknüpft sind.

Direkt an Siliciumatome gebundenes Halogen enthaltende Polycarbosilane sind ebenfalls bekannt; ihre Herstellung ist beispielsweise in W. Noll, Chemistry and Technology of Silicones, Academic Press, Orlando, 1968, Seite 356 - 364 beschrieben. Sie sind aus Einheiten der Formel

$$\left[R_nSi-R'_{\overline{3-n}}\right] \qquad (II)$$

aufgebaut, wobei R und n die oben für Formel (I) angegebenen Bedeutungen haben, und

R' zweiwertige Kohlenwasserstoffreste mit 1 bis 18 Kohlenstoffatomen sind, insbesondere Phenylenreste und Reste

der Formel

$-(CH_2)_m-$ , wobei m eine ganze Zahl von 1 bis 8 ist,

bedeutet.

Solche Polycarbosilane sind u. a. durch die Reaktion von Dimethyldichlorsilan mit 1,6-Dichlorhexan und Magnesium zugänglich (ibid, S. 357).

Das erfindungsgemäße Verfahren läßt sich selbstverständlich auf alle Polymere anwenden, die direkt an Siliziumatome gebundenes Halogen enthalten.

Unter dem eingangs und im Hauptanspruch erwähnten Begriff "Polysilane und/oder Polycarbosilane" sind auch solche Polymere zu verstehen, die in einem Molekül sowohl Einheiten der Formel (I) als auch solche der Formel (II) tragen. Desgleichen sind Mischungen von Polysilanen, Mischungen von Polycarbosilanen, sowie Mischungen von mindestens einem Polysilan mit mindestens einem Polycarbosilan unter diesen Begriff zu zählen.

Die dem erfindungsgemäßen Verfahren zugrundeliegende chemische Reaktion läuft wahrscheinlich gemäß folgender Gleichung ab:

$$\text{Polymer-X} + [(CH_3)_3Si]_2NH \rightleftharpoons \text{Polymer-NH-Si}(CH_3)_3 + (CH_3)_3SiX ,$$

worin

X ein direkt an ein Siliciumatom gebundenes Halogenatom, vorzugsweise ein Chloratom, bedeutet.

Als Nebenprodukt der Reaktion von Si-gebundenes Chlor enthaltenden Polysilanen und/oder Polycarbosilanen mit Hexamethyldisilazan entsteht also Trimethylchlorsilan, welches vorzugsweise während der Reaktion abdestilliert wird.

Im erfindungsgemäßen Verfahren werden die genannten Polysilane und/oder Polycarbosilane vorzugsweise bei Temperaturen von 20 °C bis 300 °C, insbesondere von 100 °C bis 200 °C mit Hexamethyldisilazan in Kontakt gebracht.

Die oben genannte Reaktion kann beim Druck der umgebenden Atmosphäre, also 0,102 MPa (abs.) oder etwa 0,102 MPa (abs.), sie kann aber auch bei höheren oder niedrigeren Drücken durchgeführt werden. Drücke von 0,01 MPa bis 2 MPa (abs.) sind bevorzugt.

Druck und Temperatur sind während der Reaktionszeit, also der Zeit, während der die genannten Polysilane und/oder Polycarbosilane mit Hexamethyldisilazan in Kontakt gebracht werden sollen, vorzugsweise so zu wählen, daß das entstehende Trimethylhalogensilan abdestilliert werden kann.

Die Reaktionszeit beträgt vorzugsweise von 0,1 h bis 10 h, insbesondere von 1 h bis 5 h.

Während der Reaktionszeit oder nach deren Ablauf wird gegebenenfalls überschüssig vorhandenes Hexamethyldisilazan vorzugsweise abdestilliert.

Das erfindungsgemäße Verfahren kann unter Zusatz eines inerten Lösungsmittels durchgeführt werden. Beispiele für solche Lösungsmittel sind Aromaten und substituierte Aromaten, wie Benzol, Toluol, Xylole, Mesitylen; aliphatische Kohlenwasserstoffe und deren Gemische, wie n-Oktan, n-Decan, Oktan-Isomerengemisch, Petrolether verschiedener Siedebereiche und ähnliche mehr.

Vorzugsweise übernimmt im erfindungsgemäßen Verfahren das als Reagens verwendete Hexamethyldisilazan auch die Rolle des Lösungsmittels oder Suspendierungsmediums, so daß kein zusätzliches Lösungsmittel benötigt wird. Entsprechend kann

es ratsam sein, Hexamethyldisilazan im Überschuß zu der dem zu entfernenden Chlor äquivalenten Menge einzusetzen.

Die nachfolgenden Beispiele wurden, sofern nicht anders angegeben, beim Druck von 0,10 MPa (abs.) durchgeführt. Die Temperatur betrug, falls nicht anders angegeben, 20° C. Prozentzahlen beziehen sich auf das Gewicht des jeweiligen Polysilans bzw. Polycarbosilans.

Beispiel 1:

Eine Lösung von 20 g eines 35 % Si-gebundenes Chlor enthaltenden Polysilans, dessen organische Gruppen Methyl-Gruppen sind, in 38,5 g (0,24 Mol) Hexamethyldisilazan wurde während 120 min in einer Destillationsapparatur bis auf 200° C erhitzt und bei dieser Temperatur die flüchtigen Komponenten abdestilliert. Anschließend wurde das Reaktionsgemisch 5 min bei 200° C und 1 kPa (abs.) belassen und schließlich abgekühlt. Erhalten wurden 19,6 g eines Polycarbosilanharzes mit einem Stickstoffgehalt von 5,3 % und einem Chlorgehalt von 0,7 %.

Beispiel 2 :

Eine Lösung von 50 g des in Beispiel 1 eingesetzten Polysilans in 80,5 g (0,5 Mol) Hexamethyldisilazan wurde während 100 min von 20°C auf 150° C in einer Destillationsapparatur erhitzt und die flüchtigen Komponenten abdestilliert. Das Destillat enthielt 62,8 % Hexamethyldisilazan und 37,2 % Chlortrimethylsilan. Anschließend wurde das Reaktionsgemisch bei 150° C und 1 kPa (abs.) belassen und schließlich abgekühlt. Erhalten wurden 28,2 g eines in Toluol, in Dichlormethan und in Trichlormethan löslichen Polymeren mit einem Stickstoffgehalt von 5,1 % und einem Chlorgehalt von 13,1 %.

Beispiel 3:

Eine Lösung von 30 g des in Beispiel 1 eingesetzten Polysilans in 240,24 g (1,5 Mol) Hexamethyldisilazan wurden während 110min von ca. 20° C auf 160° C in einer Destillationsapparatur erhitzt und bei dieser Temperatur die flüchtigen Komponenten abdestilliert. Anschließend wurde das Reaktionsgemisch 5 min lang bei 160° C und 1 kPa (abs.) belassen und schließlich abgekühlt. Erhalten wurden 52,5g eines farblosen, porösen Feststoffs mit einem Stickstoffgehalt von 7,3 % und einem Chlorgehalt von 3,7 %.

Beispiel 4:

Eine Lösung von 10 g des in Beispiel 1 eingesetzten Polysilans in 50 ml Mesitylen und 16,47 g (0,1 Mol) Hexamethyldisilazan wurde 3 h lang unter Rückfluß erhitzt. Anschließend wurden die flüchtigen Komponenten bei 100 °C und 1 kPa (abs.) abdestilliert und der verbliebene Rückstand abkühlen gelassen. Erhalten wurden 13 g eines porösen Feststoffs mit einem Stickstoffgehalt von 5,4 % und einem Chlorgehalt von 2,9 %.

Beispiel 5:

Beispiel 4 wurde wiederholt mit der Abänderung, daß das Reaktionsgemisch anstatt 3 h unter Rückfluß 10 h bei 250° C in einem Autoklaven erhitzt wurde. Nach dem Abdestillieren der flüchtigen Komponenten bei 1 kPa (abs.) und bis zu 100°C erhielt man 13,5g eines in THF, $CCl_4$, $CHCl_3$ u. Toluol löslichen, schmelzbaren Polymeren mit einem Stickstoffgehalt von 5,0 % und einem Chlorgehalt von 4,6 %.

Beispiel 6:

Eine Lösung von 1 g eines Polymeren der Formel $(SiCl_2)_x$ in 5 ml(3,85g) Hexamethyldisilazan wurde während 110 min von ca. 20° C auf 150° C erhitzt. Nach Abdestillation der flüchtigen Komponenten bei 1 kPa (abs.) und bis zu 100 ° C

wurden 1,7 g eines in $CCl_4$ u. Toluol löslichen, unschmelzbaren Feststoffes mit einem Stickstoffgehalt von 11 % und einem Chlorgehalt von 2,5 % erhalten.

Beispiel 7:

Ein Polycarbosilan mit 50,1 % Si-gebundenem Chlor wurde durch die Reaktion von äquimolaren Mengen Dichlordivinylsilan und Dichlorsilan in Toluol in Gegenwart eines Platinkatalysators hergestellt. Eine Lösung von 12,6 g (0,05 mol) dieses Polycarbosilans in 48,3 g (0,3 Mol) Hexamethyldisilazan wurde während 80 min bis auf 200° C erhitzt, wobei die flüchtigen Komponenten abdestilliert wurden. Erhalten wurden 15,2 g eines unschmelzbaren, in THF, Toluol, $CCl_4$, $CHCl_3$ unlöslichen Feststoffs mit einem Chlorgehalt von 12,9 % und einem Stickstoffgehalt von 4,6 %.

Beispiel 8:

Eine Lösung von 10 g (0,1 mol) Dichlorsilan in 200 ml Toluol wurde mit 3 g Acetylen in Gegenwart eines Platinkatalysators bei 0° C umgesetzt. Anschließend wurde 1 h auf 80° C erwärmt. Nach Abdestillieren des Lösungsmittels erhielt man 11,8 g eines braunen Ols mit einem Chlorgehalt von 55 %. Diese Menge an Öl wurde mit 48,3 g (0,3 Mol) Hexamethyldisilazan versetzt und die Mischung während 120 min bis auf 195° C erhitzt, wobei die flüchtigen Komponenten abdestilliert wurden. Erhalten wurden 14,5 g eines unschmelzbaren und in THF, $CCl_4$, $CHCl_3$ und Toluol unlöslichen Polymers mit einem Chlorgehalt von 17,4 % und einem Stickstoffgehalt von 8,4 %.

P a t e n t a n s p r ü c h e :

1. Verfahren zum Verringern des Halogengehaltes von direkt an Siliciumatome gebundenes Halogen enthaltenden Polysilanen und/oder Polycarbosilanen,

d a d u r c h g e k e n n z e i c h n e t ,

daß die genannten Polysilane und/oder Polycarbosilane mit Hexamethyldisilazan in Kontakt gebracht werden.

2. Verfahren nach Anspruch 1,

d a d u r c h g e k e n n z e i c h n e t ,

daß es bei Temperaturen von 20 °C bis 300 °C durchgeführt wird.

3. Verfahren nach Anspruch 1 oder 2,

d a d u r c h g e k e n n z e i c h n e t ,

daß das durch die Reaktion von Hexamethyldisilazan mit direkt an Siliciumatome der Polysilane und/oder Polycarbosilane gebundenem Halogen entstehende Trimethylhalogensilan während dieser Reaktion abdestilliert wird.